# EUROPÄISCHE PATENTANMELDUNG

(11) **EP 2 101 040 A2**
(43) Veröffentlichungstag der Anmeldung: **16.09.2009**
(21) Anmeldenummer: 09002942.2
(22) Anmeldetag: 02.03.2009
(51) Int. Cl.: F01D 5/02, F02K 3/06, F02K 3/072, F02C 3/06, F02C 3/067

(54) **Strömungsarbeitsmaschine mit mehrstromiger Rotoranordnung**

(30) Priorität: 11.03.2008 DE 102008013542
(71) Anmelder: Rolls-Royce Deutschland Ltd & Co KG, 15827 Blankenfelde-Mahlow (DE)
(72) Erfinder: Gümmer, Volker Dr., 15831 Mahlow (DE)
(74) Vertreter: Weber, Joachim

(57) **Zusammenfassung**

Die Erfindung betrifft eine Strömungsarbeitsmaschine mit zumindest einem Gehäuse (1) und zumindest einer um eine Maschinenachse (4) drehbaren Rotortrommel (3), wobei in einem zwischen dem Gehäuse (1) und der Rotortrommel (3) gebildeten Ringkanal (2) Statorschaufeln (8) und Rotorschaufeln (7) angeordnet sind, wobei der Ringkanal (2) durch zumindest einen ringförmigen Strömungsteil (11) in einen äußeren Ringkanal (5) und einen inneren Ringkanal (6) unterteilt ist, in denen jeweils Rotorschaufeln (7) und Statorschaufeln (8) angeordnet sind, dadurch gekennzeichnet, dass äußere Rotorschaufeln (7a), welche in dem äußeren Ringkanal (5) angeordnet sind, mit einer unterschiedlichen Drehzahl antreibbar sind, wie innere Rotorschaufeln (7b), welche in dem inneren Ringkanal (6) angeordnet sind.

## Beschreibung

Die Erfindung bezieht sich auf eine Strömungsarbeitsmaachare gemäß dem Oberbegriff des Anspruches 1.

Die vorliegende Erfindung bezieht sich auf Strömungsarbeitsmaschinen wie Bläser, Verdichter, Pumpen und Ventilatoren axialer und halbaxialer Bauart mit gasförmigem oder flüssigem Arbeitsmedium (Fluid). Die Strömungsarbeitsmaschine besteht aus mindestens einer Stufe, wobei jede Stufe von einem Rotor mit nachfolgendem Stator oder durch einen Rotor allein gebildet werden kann. Der Rotor besteht aus einer Anzahl von Schaufeln, die mit einer Rotortrommel verbunden sind und Energie an das Arbeitsmedium abgeben. Der Rotor kann mit oder ohne Deckband am äußeren Schaufelende ausgeführt sein. Ein gegebenenfalls vorhandener Stator besteht aus einer Anzahl feststehender Schaufeln, die nabenseitig und/oder gehäuseseitig mit festem oder freiem Schaufelende ausgeführt sein können. Die Rotortrommel und die Beschaufelung sind von einem Gehäuse umgeben. Die Maschine kann einen Stator vor dem ersten Rotor aufweisen (Vorleitrad). Die Statoren können - abweichend von der unbeweglichen Fixierung - drehbar gelagert sein und zur Verstellung eine von außerhalb des Ringkanals zugängliche Spindel besitzen.

Die Leistungsfähigkeit und Effizienz von Strömungsarbeitsmaschinen wie Bläsern, Verdichtern, Pumpen und Ventilatoren wird maßgeblich durch die zwischen den strömungspfadbegrenzenden Naben- und Gehäusekonturen vorliegenden Veränderung der Strömungsbedingungen entlang der Schaufelhöhe bestimmt. Diese radiale Variation der Strömungsbedingungen ist dann sehr ausgeprägt und ungünstig, wenn der Nabenradius bezogen auf den Gehäuseradius einer Schaufelreihe, Rotor oder Stator, sehr klein ist.

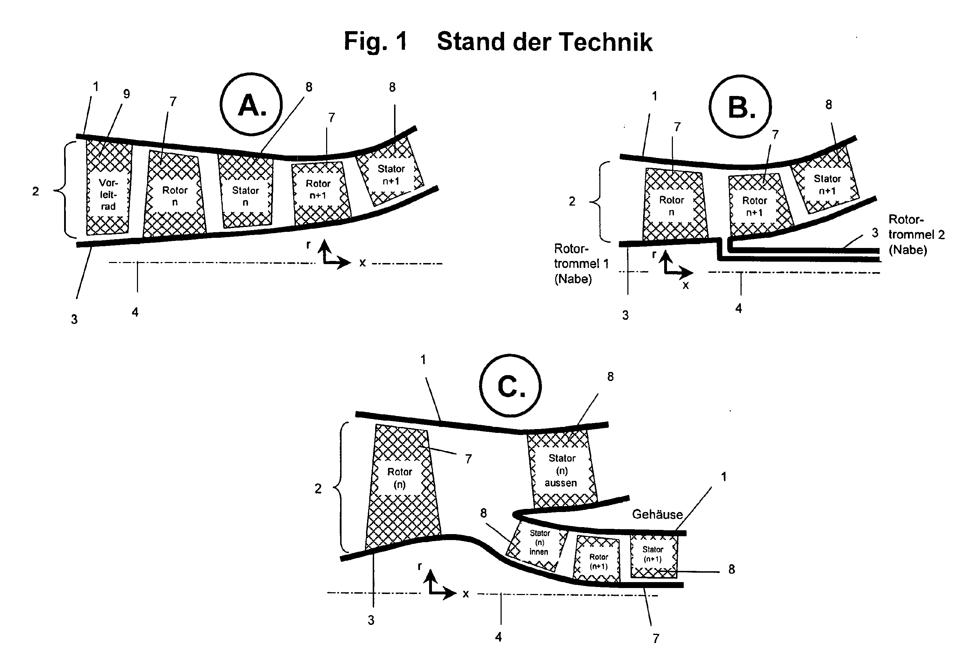

Strömungsarbeitsmaschinen nach dem Stand der Technik sehen vor, dass der zu fördernde Massenstrom sich innerhalb und entlang eines einzelnen, üblicherweise als Ringkanal geformten Strömungspfades bewegt. Sofern dabei dem Fluid durch Rotoren Energie zugeführt wird, geschieht dies entlang der gesamten Ringkanalhöhe durch eine in radialer Richtung ungeteilte Rotorschaufelreihe, siehe Fig.1 oben. In manchen Lösungen nach dem Stand der Technik ist ein nicht rückführender Nebenstromkanal, in dem keine Rotoren enthalten sind, vorgesehen, siehe Fig.1, unten.

Bei den Rotoren ist die radiale Variation der Strömungsbedingungen stark an die lokale Blattgeschwindigkeit der Schaufeln gebunden, die bei gegebener Drehzahl der Rotorwelle von Nabe zu Gehäuse stark zunimmt, und damit zwar im Bereich des Mittelschnitts des Rotors günstig gewählt werden kann, aber an der Nabe viel zu gering und am Gehäuse viel zu hoch ist. Folglich sind gerade in der Nähe der Nabe und des Gehäuses deutliche Einbußen im Bezug auf die Effizienz und die Weite des Arbeitsbereichs des Rotors festzustellen. Zudem ist der von der Maschine pro Querschnittsflächeneinheit förderbare Fluidmassenstrom häufig wegen der hohen Zuström-Machzahlen im Rotorspitzenbereich limitiert.

Als nächstliegender Stand der Technik ist auf die DE OS 1 526 815 zu verweisen. Die Druckschrift zeigt einen Ringkanal, in welchem mittels eines ringförmigen Strömungsteilers ein äußerer Ringkanal und ein innerer Ringkanal gebildet sind. Die in den jeweiligen Ringkanälen angeordneten Rotorschaufeln sind fest miteinander verbunden und sind mit gleicher Drehzahl angetrieben.

Der Erfindung liegt die Aufgabe zugrunde, eine Strömungsarbeitsmaschine der eingangs genannten Art zu schaffen, welche bei einfachem Aufbau und kostengünstiger Herstellbarkeit strömungstechnisch optimierbar ist und unterschiedlichsten Betriebsbedingungen angepasst werden kann.

Erfindungsgemäß wird die Aufgabe durch die Merkmalkombination des Hauptanspruchs gelöst, die Unteransprüche zeigen weitere vorteilhafte Ausgestaltungen der Erfindung.

Erfindungsgemäß ist somit vorgesehen, dass die äußeren Rotorschaufeln und die inneren Rotorschaufeln bzw. die äußere Rotorschaufelreihe und die innere Rotorschaufelreihe mit unterschiedlichen Drehzahlen antreibbar sind. Der Antrieb kann erfindungsgemäß mit gleichbleibendem Drehzahlverhältnis oder mit variablem Drehzahlverhältnis ausgestattet sein. Erfindungsgemäß ist es somit in vorteilhafter Weise möglich, eine optimierte Anpassung an unterschiedlichste Betriebsparameter zu erreichen.

Die erfindungsgemäße mehrstromige Rotoranordnung erlaubt eine signifikante Steigerung des stirnflächenbezogenen Massenstroms einer Strömungsarbeitmaschine sowie bei Anwendung auf den Fan eines Flugtriebwerks eine etwa 2 %ige Steigerung des Wirkungsgrades. Bei Einsatz des Konzeptes im Verdichter eines Flugtriebwerks mit rund 25000 Pfund Schub ergibt sich unmittelbar eine Reduzierung des spezifischen Kraftstoffverbrauches von wenigstens 1%.

Im Einzelnen betrifft die Erfindung somit eine Strömungsarbeitsmaschine mit mindestens einem Abschnitt seines Strömungspfades, in dem ausgehend von einem einstromigen Ringkanal eine Aufteilung des Fluidstroms auf mindestens zwei konzentrisch angeordnete Teilringkanäle (einen äußeren Ringkanal und einen inneren Ringkanal) vorgesehen ist, wobei jeder der Teilfluidströme in seinem weiteren Verlauf mindestens eine Schaufelreihe von Rotoren passiert und mindestens zwei in unterschiedlichen Teilringkanälen vorgesehene Rotorschaufelreihen benachbart zueinander angeordnet sind.

Die Strömungsarbeitsmaschine kann vorteilhafterweise so ausgebildet sein, dass:
a.) mindestens zwei in unterschiedlichen Teilringkanälen vorgesehene Rotorschaufelreihen sich in axialer Richtung teilweise oder gänzlich überlappen,
b.) die Rotortrommel, mit der eine in einem Teilringkanal angeordnete Rotorschaufelreihe verbunden ist, die Ummantelung einer anderen, in einem weiter innen liegenden Teilringkanal angeordneten Rotorschaufelreihe darstellt und die Rotortrommel auf diese Weise sowohl außenseitig als auch innenseitig von Fluid umströmt wird,
c.) mindestens zwei in unterschiedlichen Teilringkanälen vorgesehene Rotorschaufelreihen durch separate Wellen angetrieben werden, oder bei Antrieb durch eine einzige Welle mit Hilfe eines Getriebes zur Schaffung unterschiedlicher Drehzahlen aneinander gekoppelt sind und im Speziellen die Drehzahlen im gleichen Verhältnis stehen wie die mittleren Austrittsradien der betroffenen Rotorschaufelreihen,
d.) mindestens einer der Teilringkanäle im Bereich stromauf einer Rotor- oder Statorschaufelreihe so ausgeführt ist, dass sich die Querschnittsfläche in Strömungsrichtung erweitert (Diffusor),
e.) mindestens zwei in unterschiedlichen Teilringkanälen vorgesehene und benachbart angeordnete Rotorschaufelreihen sich in radialer Richtung teilweise überlappen, derart, dass der Vorderkantennabenradius des weiter außen liegenden Rotors kleiner ist als der der Vorderkantenblattspitzenradius des weiter innen liegenden Rotors,
f.) die Rotationsrichtung mindestens zweier in unterschiedlichen Teilringkanälen vorgesehenen Rotorschaufelreihen gleich oder entgegengesetzt beschaffen ist.

Im Folgenden wird die Erfindung anhand von Ausführungsbeispielen in Verbindung mit den Figuren beschrieben. Dabei zeigt:
- Fig. 1:: Strömungsarbeitsmaschinen nach dem Stand der Technik,
- Fig. 2:: Erfindungsgemäße Rotorkonfiguration mit zwei Antriebswellen,
- Fig. 3:: Weitere erfindungsgemäße Rotorkonfiguration mit zwei Antriebswellen,
- Fig. 4:: Weitere erfindungsgemäße Rotorkonfiguration mit zwei Antriebswellen,
- Fig. 5:: Weitere erfindungsgemäße Rotorkonfiguration mit zwei Antriebswellen,
- Fig. 6:: Erfindungsgemäße Rotorkonfiguration mit Untersetzungsgetriebe,

- Fig. 7:: Weitere erfindungsgemäße Rotorkonfiguration mit Untersetzungsgetriebe,
- Fig. 8:: Weitere erfindungsgemäße Rotorkonfiguration mit Untersetzungsgetriebe, und
- Fig. 9:: Erfindungsgemäße Rotorkonfiguration, Abmessungen.

Die Fig.1 zeigt in vereinfachter Weise die erfindungsgemäß mögliche Ausgestaltung der Strömungsarbeitsmaschine, gemäß dem Stand der Technik. Dabei kann der Ringkanal hinsichtlich seiner Höhe variieren, es ist möglich, den Strömungsweg des Ringkanals durch eine Abzweigung aufzuteilen oder in Axialrichtung hintereinander angeordnete Rotorschaufelreihen mit unterschiedlicher Drehzahl anzutreiben.

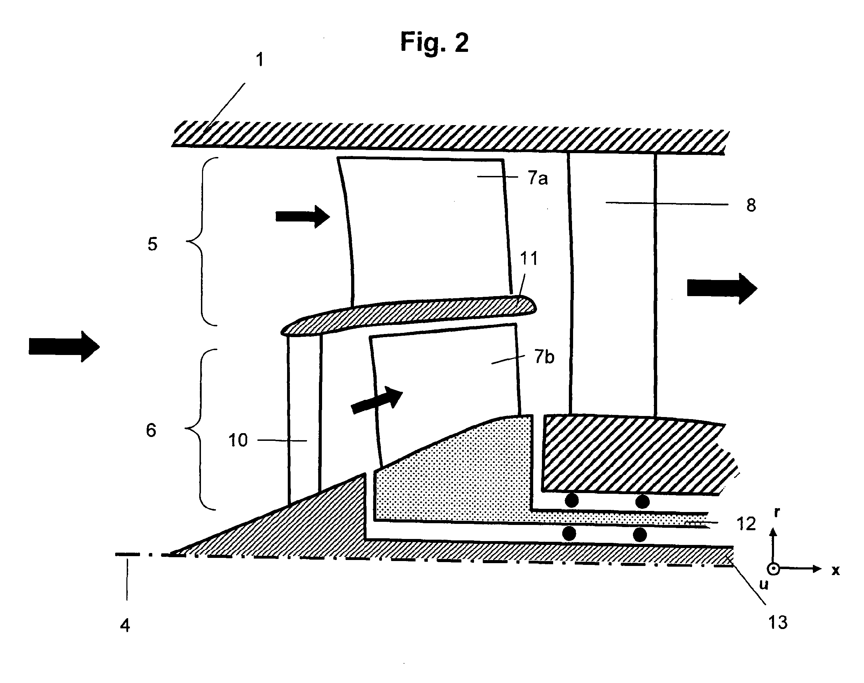

Die Fig.2 zeigt einen Abschnitt einer erfindungsgemäßen Strömungsarbeitmaschine mit einer mehrstromigen Rotoranordnung, die von einem Gehäuse umgeben ist. Hier ist eine zweistromige Konfiguration gezeigt, die aber leicht durch Wiederholung des zur Schaffung der Zweistromigkeit verwendeten Konzepts auf eine ebenfalls erfindungsgemäße Konfiguration mit beispielsweise drei oder mehr Teilströmen erweitert werden kann.

Wie durch einen dicken Pfeil angedeutet, nähert sich der in einem einstromigen Teil des Ringkanals geführte Fluidhauptstrom von links. Der Hauptfluidstrom wird in seinem weiteren Verlauf in zwei Teilfluidströme aufgeteilt, von denen jeder in einem Teilringkanal geführt wird und wobei jedem Teilfluidstrom in seinem weiteren Verlauf durch eine individuelle Reihe von Rotorschaufeln Energie zugeführt wird. Der innere Teilfluidstrom passiert die Rotorschaufelreihe 7b während der äußere Teilfluidstrom die Rotorschaufelreihe 7a passiert. Die Trommel des äußeren Rotors 7a bildet eine Trennung zwischen den Teilfluidströmen, stellt also ein drehendes Gehäuse beziehungsweise eine drehende Ummantelung der inneren Rotorschaufelreihe 7b dar. Stromab der Rotoren 7b und 7a erfolgt ein Wiedervereinigung der Teilfluidströme. Es kann mindestens ein Stator 8, wie hier beispielhaft gezeigt, im bereits vereinigten Fluidstrom oder aber in einem der Teilfluidströme angeordnet sein.

Die radial innere Rotorschaufelreihe 7b und die radial äußere Rotorschaufelreihe 7a sind benachbart, und in dem hier dargestellten Fall sogar weitgehend im gleichen, auf die Meridianströmungsrichtung bezogenen Bereich, vorgesehen.

Jede Teilstromrotorreihe wird in der hier gewählten erfindungsgemäßen Darstellung durch eine separate Welle angetrieben, wobei die Drehzahlen der Wellen unterschiedlich sein können.

Für die Leistungsübertragung von der inneren Antriebswelle zur Trommel der äußeren Rotorschaufelreihe 7a ist eine Reihe von profilierten oder unprofilierten Streben oder auch Schaufeln vorgesehen, die sich in dem hier gezeigten Beispiel stromauf des inneren Rotors befinden.

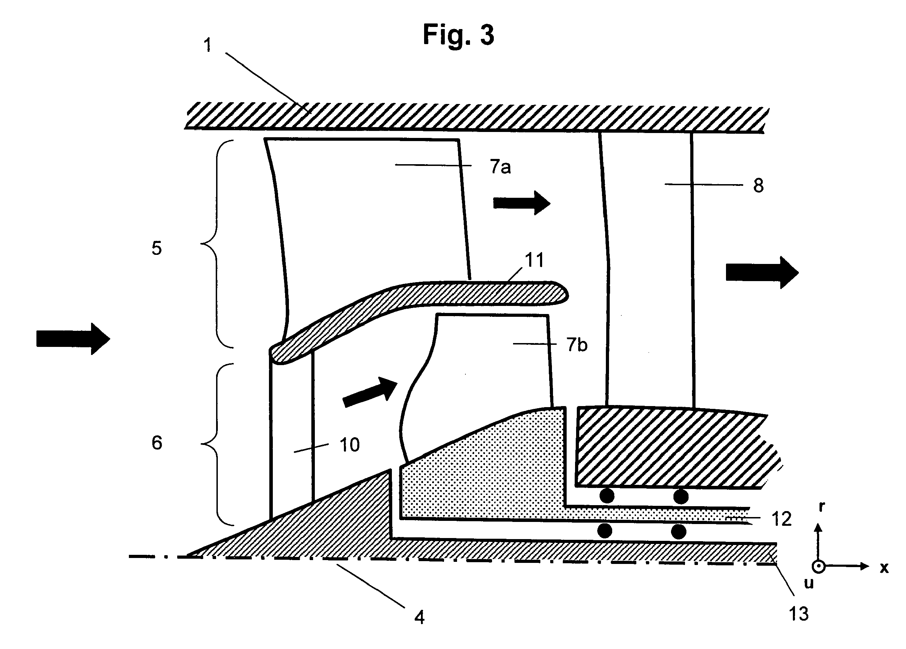

Ganz ähnlich wie Fig.2 zeigt die Fig.3 den Abschnitt einer erfindungsgemäßen Strömungsarbeitmaschine mit einer mehrstromigen Rotoranordnung. Der Hauptfluidstrom wird auch hier in seinem Verlauf in zwei Teilfluidströme aufgeteilt und die Trommel des äußeren Rotors 7a bildet eine Trennung zwischen den Teilfluidströmen. Allerdings sind in der hier gezeigten erfindungsgemäßen Lösung die innere Rotorschaufelreihe 7b und die äußere Rotorschaufelreihe 7a zwar benachbart, doch sind sie, auf die Meridianströmungsrichtung bezogen, versetzt angeordnet. Dabei ist der vor dem Rotor 7b liegende Teil des inneren Teilringkanals diffusorartig, das heißt mit einer in Strömungsrichtung zunehmenden Querschnittsfläche, geformt. Bei erfindungsgemäß besonders günstiger Gestaltung kann die Vorderkante der als äußere Begrenzung des inneren Teilringkanals fungierende Trommel des Rotor 7a radial weiter innen liegen als die Schaufelspitze des Rotors 7b.

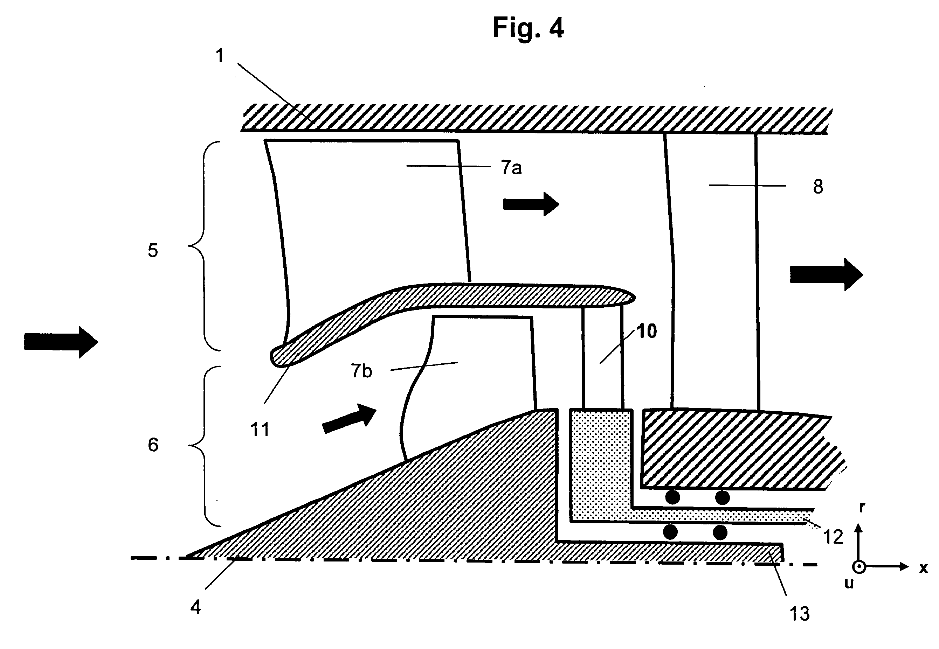

Ganz ähnlich wie Fig.3 zeigt die Fig.4 4 den Abschnitt einer erfindungsgemäßen Strömungsarbeitmaschine mit einer mehrstromigen Rotoranordnung. Allerdings erfolgt in der hier gezeigten erfindungsgemäßen Lösung die Kraftübertragung von der Antriebswelle zur Trommel der äußeren Rotorschaufelreihe 7a durch eine Reihe von Streben oder Schaufeln, die stromab des Rotors 7b vorgesehen sind.

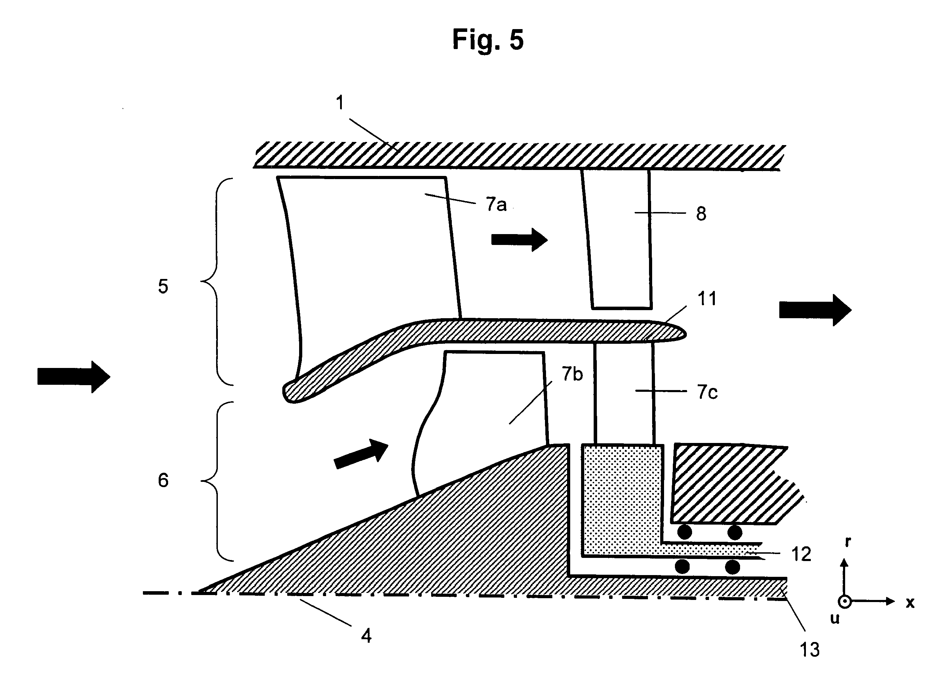

Ganz ähnlich wie Fig.4 4 zeigt die Fig.5 den Abschnitt einer erfindungsgemäßen Strömungsarbeitmaschine mit einer mehrstromigen Rotoranordnung. Allerdings erfolgt in der hier gezeigten erfindungsgemäßen Lösung die Kraftübertragung von der Antriebswelle zur Trommel der äußeren Rotorschaufelreihe 7a durch eine Reihe von Schaufeln (Rotor 7c), die sich hier, wie auch Rotor 7a, gegenläufig zu Rotor 7b dreht. Dadurch ist hinter Rotor 7c keine Statorreihe nötig, hinter Rotor 7a aber schon.

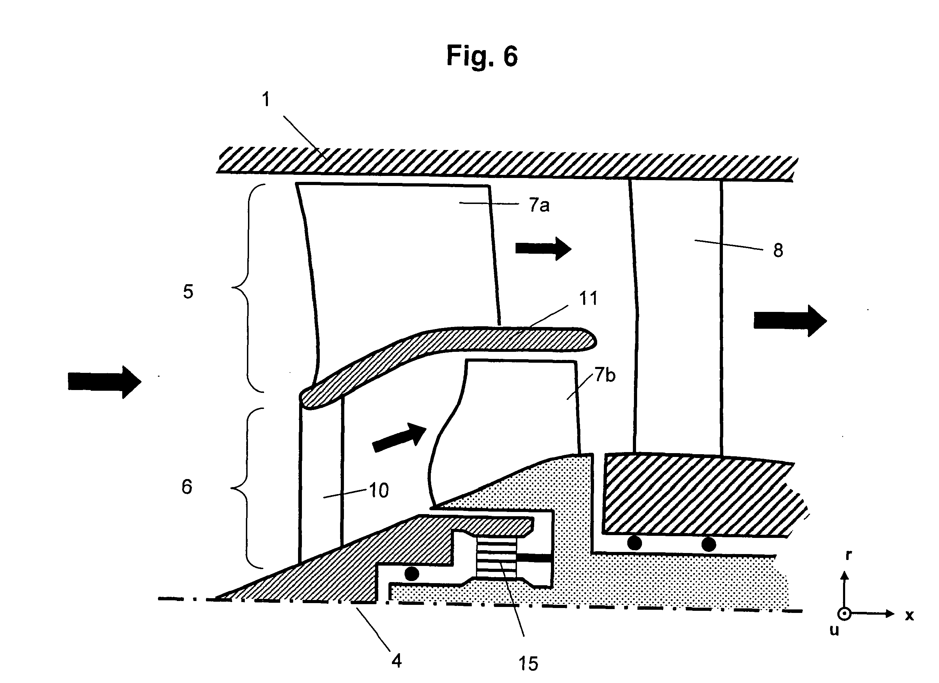

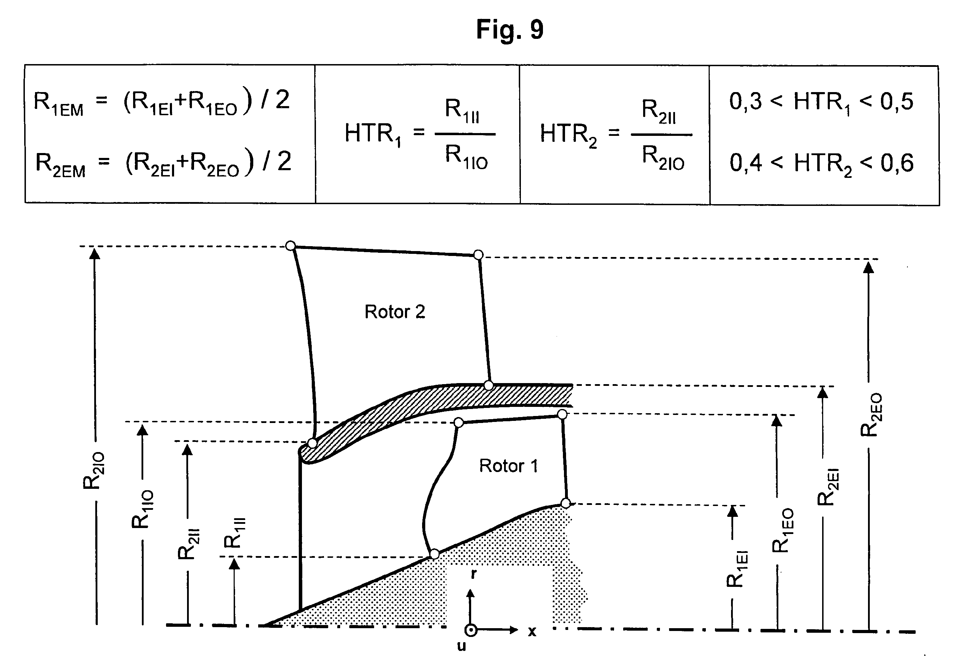

Ähnlich wie Fig.3 zeigt die Fig.6 den Abschnitt einer erfindungsgemäßen Strömungsarbeitmaschine mit einer mehrstromigen Rotoranordnung. Allerdings erfolgt in der hier gezeigten erfindungsgemäßen Lösung die Kraftübertragung über eine einzelne Antriebswelle, die den Rotor 7b mit gleicher Drehzahl bewegt, aber auch den Rotor 7a über ein Getriebe 15 antreibt. Die Drehzahlen der Rotoren 7b und 7a stehen folglich während des Betriebs in einem festen Verhältnis. Erfindungsgemäß vorteilhaft ist eine Untersetzung vom Rotor 7b zum Rotor 7a. Erfindungsgemäß besonders vorteilhaft ist es, wenn das Untersetzungsverhältnis U im Wesentlichen dem Verhältnis der mittleren Austrittsradien (siehe R1EM und R2EM in Fig.9) entspricht, d.h.: RM = R2EM / R1EM (R2 bezieht sich auf den Rotor 7a, während R1 sich auf den Rotor 7b bezieht).

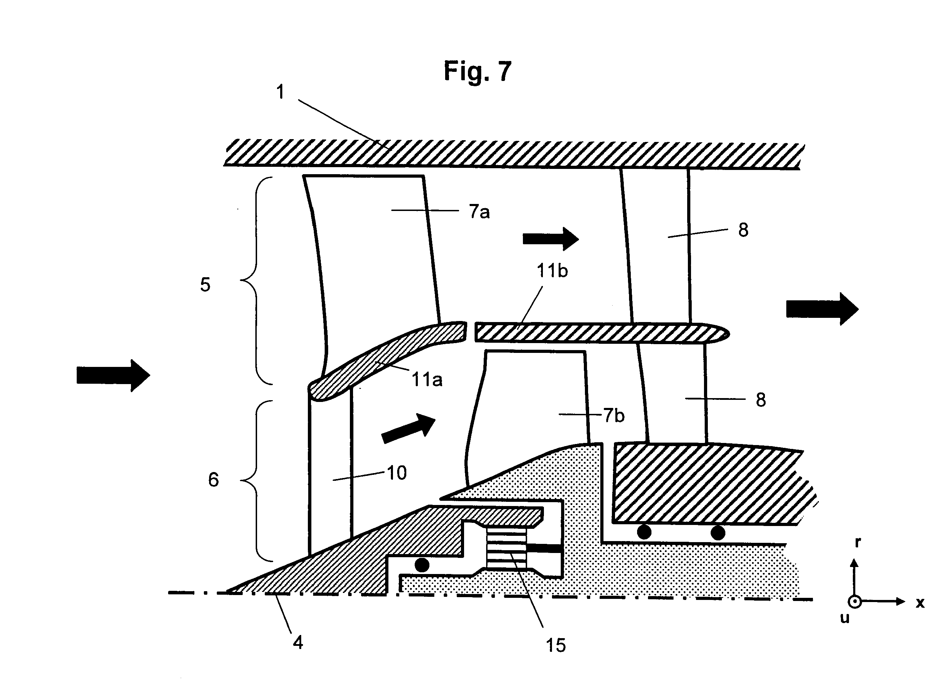

Die Fig.7 zeigt eine ähnliche erfindungsgemäße Lösung wie Fig.6. Allerdings sind hier die innere Rotorschaufelreihe 7b und die äußere Rotorschaufelreihe 7a zwar benachbart, besitzen aber bezogen auf die Meridianströmungsrichtung oder auch Axialrichtung keine Überlappung. Dabei kann die innere Rotorschaufelreihe 7b anstelle von der Trommel der Rotorschaufelreihe 7b von einem stehenden Gehäuse 1 umgeben sein, das mit mindestens einer stromab angeordneten Streben- oder Statorschaufelreihe verbunden ist.

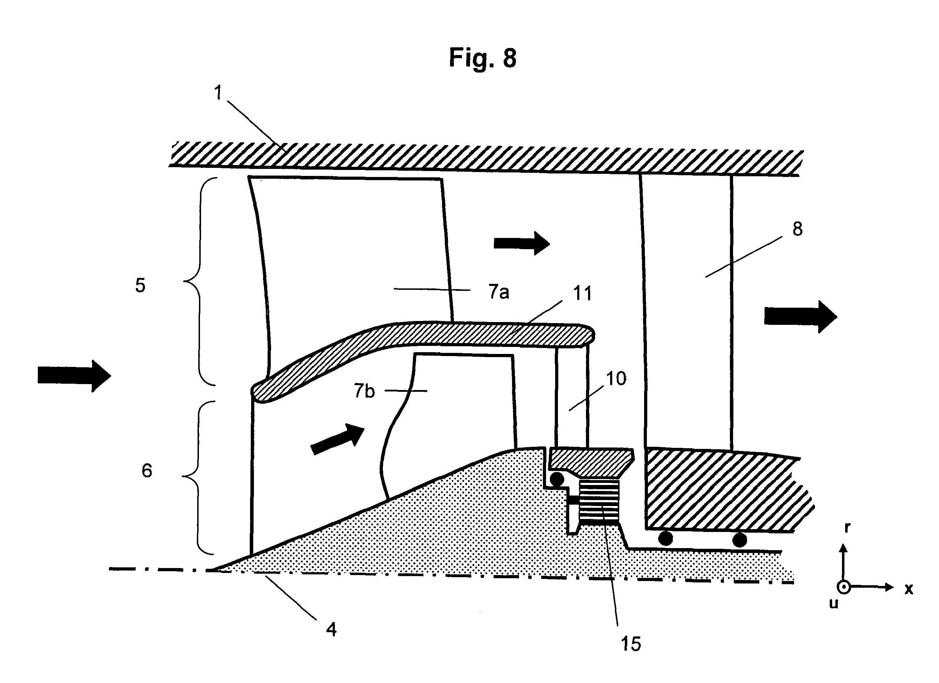

Die Fig.8 zeigt eine ähnliche erfindungsgemäße Lösung wie Fig.6. Auch hier erfolgt Antrieb der Rotorschaufelreihe 7a über ein Getriebe 15, das allerdings so angeordnet ist, dass die Verbindung zur Trommel der Rotorschaufelreihe 7a mit Hilfe einer Reihe von Streben oder Schaufeln erfolgen kann, die stromab der Rotorschaufelreihe 7b angeordnet ist.

### Bezugszeichenliste

- 1: Gehäuse/feststehende Struktur
- 2: Ringkanal
- 3: Rotortrommel/Trommel/Nabe
- 3a: Rotortrommel/Trommel/Nabe für äußere Rotorschaufel 7a
- 3b: Rotortrommel/Trommel/Nabe für innere Rotorschaufel 7b
- 4: Maschinenachse
- 5: äußerer (Teil-)Ringkanal
- 6: innere (Teil-)Ringkanal
- 7: Rotorschaufel/Rotorschaufelreihe
- 7a: äußere Rotorschaufel/äußere Rotorschaufelreihe
- 7b: innere Rotorschaufel/innere Rotorschaufelreihe
- 7c: Rotor
- 8: Statorschaufel/Statorschaufelreihe
- 9: Vorleitrad
- 10: Strebe
- 11: Strömungsteiler
- 12: Antriebswelle
- 13: Antriebswelle
- 14: Antriebswelle
- 15: Getriebe

## Patentansprüche

1. Strömungsarbeitsmaschine mit zumindest einem Gehäuse (1) und zumindest einer um eine Maschinenachse (4) drehbaren Rotortrommel (3), wobei in einem zwischen dem Gehäuse (1) und der Rotortrommel (3) gebildeten Ringkanal (2) Statorschaufeln (8) und Rotorschaufeln (7) angeordnet sind, wobei der Ringkanal (2) durch zumindest einen ringförmigen Strömungsteiler (11) in einen äußeren Ringkanal (5) und einen inneren Ringkanal (6) unterteilt ist, in denen jeweils Rotorschaufeln (7) und Statorschaufeln (8) angeordnet sind, **dadurch gekennzeichnet, dass** äußere Rotorschaufeln (7a), welche in dem äußeren Ringkanal (5) angeordnet sind, mit einer unterschiedlichen Drehzahl antreibbar sind, wie innere Rotorschaufeln (7b), welche in dem inneren Ringkanal (6) angeordnet sind.

2. Strömungsarbeitsmaschine nach Anspruch 1, **dadurch gekennzeichnet, dass** die in dem äußeren Ringkanal (5) und in dem inneren Ringkanal (6) jeweils angeordneten Rotorschaufeln (7a, 7b) mittels separater Antriebswellen (12, 13) antreibbar sind.

3. Strömungsarbeitsmaschine nach Anspruch 1, **dadurch gekennzeichnet, dass** die in dem äußeren Ringkanal (5) und dem inneren Ringkanal (6) jeweils angeordnete Rotorschaufeln (7a, 7b) mittels einer einzigen Antriebswelle und zumindest einem Getriebe (15) zur Erzeugung unterschiedlicher Drehzahlen angetrieben und miteinander gekoppelt sind.

4. Strömungsarbeitsmaschine nach einem der Ansprüche 1 bis 3, **dadurch gekennzeichnet, dass** die unterschiedlichen Drehzahlen der äußeren Rotorschaufeln (7a) und der inneren Rotorschaufeln (7b) in dem gleichen Verhältnis zueinander stehen, wie mittlere Austrittsradien der durch die äußeren Rotorschaufeln (7a) und die inneren Rotorschaufeln (7b) gebildeten Rotorschaufelreihen.

5. Strömungsarbeitsmaschine nach einem der Ansprüche 1 bis 4, **dadurch gekennzeichnet, dass** mindestens einer der Ringkanäle (5, 6) im Bereich stromauf einer Rotor- oder Statorschaufelreihe mit einer in Strömungsrichtung zu einem Diffusor erweiterten Querschnittsfläche ausgebildet ist.

6. Strömungsarbeitsmaschine nach einem der Ansprüche 1 bis 5, **dadurch gekennzeichnet, dass** die jeweils in den Ringkanälen (5, 6) angeordneten Rotorschaufeln (7a, 7b) sich in axialer Richtung teilweise überlappen.

7. Strömungsarbeitsmaschine nach einem der Ansprüche 1 bis 5, **dadurch gekennzeichnet, dass** die jeweils in den Ringkanälen (5, 6) angeordneten Rotorschaufeln (7a, 7b) sich in axialer Richtung gänzlich überlappen.

8. Strömungsarbeitsmaschine nach einem der Ansprüche 1 bis 7, **dadurch gekennzeichnet, dass** benachbart angeordnete Rotorschaufelreihen der Rotorschaufeln (7a, 7b) sich in radialer Richtung zumindest teilweise so überlappen, dass ein Vorderkantennabenradius des radial weiter außenliegenden Rotors kleiner ist als ein Vorderkantenblattspitzenradius eines weiter innenliegenden Rotors.

9. Strömungsarbeitsmaschine nach einem der Ansprüche 1 bis 8, **dadurch gekennzeichnet, dass** eine Rotortrommel, mit welcher eine in einem Ringkanal (5, 6) angeordnete Rotorschaufelreihe (7a, 7b) verbunden ist, die Ummantelung einer anderen, in einem radial weiter innenliegenden Ringkanal angeordneten Rotorschaufelreihe (7b, 7a) darstellt und die Rotortrommel sowohl außenseitig als auch innenseitig von Fluid umströmt ist.

10. Strömungsarbeitsmaschine nach einem der Ansprüche 1 bis 9, **dadurch gekennzeichnet, dass** eine Rotationsrichtung mindestens zweier in unterschiedlichen Ringkanälen (5, 6) angeordneten Rotorschaufelreihen (7a, 7b) gleich ist.

11. Strömungsarbeitsmaschine nach einem der Ansprüche 1 bis 9, **dadurch gekennzeichnet, dass** eine Rotationsrichtung mindestens zweier in unterschiedlichen Ringkanälen (5, 6) angeordneten Rotorschaufelreihen (7a, 7b) entgegengesetzt ist.
